**Europäisches Patentamt**

**European Patent Office**

**Office européen des brevets**

(11) Veröffentlichungsnummer: **0 615 989 A1**

# EUROPÄISCHE PATENTANMELDUNG

(21) Anmeldenummer: **94103449.8**

(22) Anmeldetag: **07.03.94**

(51) Int. Cl.5: **C08G 18/08**, C08G 18/10, C08G 18/76, C08J 11/06

(30) Priorität: **18.03.93 DE 4308791**

(43) Veröffentlichungstag der Anmeldung:
**21.09.94 Patentblatt 94/38**

(84) Benannte Vertragsstaaten:
**DE FR GB IT**

(71) Anmelder: **BAYER AG**

**D-51368 Leverkusen (DE)**

(72) Erfinder: **Nefzger, Hartmut, Dr.**
**Zu den Fussfällen 24**
**D-50259 Pulheim (DE)**
Erfinder: **Ouiring, Bernd, Dr.**
**Albrecht-Haushofer-Strasse 2**
**D-51377 Leverkusen (DE)**
Erfinder: **Meckel, Walter, Dr.**
**Zonser Strasse 9**
**D-41468 Neuss (DE)**
Erfinder: **Rasshofer, Werner, Dr.**
**Leopold-Gmelin-Strasse 31**
**D-51061 Köln (DE)**
Erfinder: **Wagner, Joachim, Dr.**
**Semmelweisstrasse 135**
**D-51061 Köln (DE)**

(54) **Verfahren zur thermoplastischen Verarbeitung von Polyurethanen.**

(57) Polyurethane mit vom NCO:H-aktiv Verhältnis weitgehend unabhängiger Schmelzviskosität, die aufgebaut sind im wesentlichen aus

A) einem oder mehreren Polydiol(en) mit Durchschnittsmolekulargewicht(en) von 550 bis 10.000,

B) einem oder mehreren im wesentlichen difunktionellen Kettenverlängerer(n) mit einem Molekulargewicht unter 500, die Amino- und/oder Hydroxylgruppen als funktionelle Gruppen enthalten,

C) einem oder mehreren Diisocyanat(en),

werden erhalten, wenn das Verhältnis der NCO-Gruppen von Komponente C) zu Zerewitinoff-aktiven Gruppen der Komponenten A und B mindestens 1.10 beträgt und die Polyurethane einer Temperaturbehandlung unterzogen werden.

EP 0 615 989 A1

Thermoplastisch, z.B. durch Spritzguß verarbeitbare Polyurethane (TPU) sind Stand der Technik.

Obwohl in der Literatur, die TPU betrifft meist NCO-CH-Verhältnisse von 0.90 bis 1.20 erwähnt sind, liegen die NCO:H-aktiv Verhältnisse in konkreten Rezepturen in der Regel nicht über 1.05. 1.08 ist die Ausnahme und wird allenfalls bei Mitverwendung von monofunktionellen Reaktianspartnern gewählt.

Nach vorherrschender Meinung sind (durch Aufschmelzen) weiterverarbeitbare Polyurethane nur dann lagerfähig, wenn sie keine überschüssigen Isocyanatgruppen, sondern OH- oder Aminoendgruppen enthalten; s.z.B. E. Müller in Houben-Weyl, Band XIV/2, G. Thieme Verlag, Stuttgart, 1963, S. 82 ff. So ist beispielsweise auf S. 85 zu lesen, daß Isocyanatgruppen, die mit Luftfeuchtigkeit reagieren können, nur beschränkt lagerfähig sind.

D. Dieterich beschreibt in der Neuauflage des gleichen Werkes, Georg Thieme Verlag 1987, Band E20, S. 1638, daß thermoplastische Elastomere (TPE) auf Basis von Polyurethanen linear aufgebaut, chemisch unvernetzt und in Dimethylformamid oder Tetrahydrofuran löslich sind. Um die thermoplastische Verarbeitbarkeit zu gewährleisten, müssen die Elastomeren frei von NCO-Gruppen sein. Ausreagierte Produkte, die ohne Kettenabbrecher hergestellt sind, weisen endständige OH-Gruppen auf.

C. Hepburn führt in der Monographie "Polyurethane Elastomers", Applied Science Publishers, London, 1982, Kap. 9 die Linieärität der Moleküle als essentielle Voraussetzung für thermoplastische Polyurethan-Elastomere an, wobei bei Verwendung eines kleinen NCO-Überschusses gegebenenfalls in einem zweiten Schritt nach der thermoplastischen Verarbeitung eine partielle chemische Vernetzung durchgeführt werden kann (S. 252).

Nach der Lehre der DOS 4 030 282 und der US-Patentschrift 5 064 600 (Spalte 2, Z. 49-58) können Produkte mit höheren NCO:OH-Verhältnissen und/oder Verzweigungsgrad allenfalls durch Tiefziehen oder Pressen thermisch verformt werden.

Nach der Lehre der DE-Patentanmeldung 4 102 999 ist es zwar möglich, aus vernetzten Isocyanatpolyadditionsprodukten in Abmischung mit anderen Thermoplaten thermoplastisch verarbeitbare Kunststoffe herzustellen. Das ist aber nur über einen starken Molekulargewichtsabbau, wie an den Beispielen zu erkennen ist, möglich: Kittartige Masse (Bsp. 1), Zugfestigkeit 6 MPa (Bsp. 2).

Ähnlich ist in der DE-Patentanmeldung 4 140 723 ein Verfahren beschrieben, das die Verarbeitung von Polyurethanschäumen gegebenenfalls in Abmischung mit Thermoplasten beansprucht. Nach der Lehre dieser Patentschrift ist das darin beanspruchte Verfahren nur auf Schäume von Isocyanatpolyadditionsprodukten anwendbar, die mit Isocyanat reaktionsfähige Verbindungen mit im Mittel mindestens 2,5 Zerewitinoff aktiven Gruppen als Rohstoffe enthalten und bei der thermoplastischen Formgebung nicht verflüssigt werden.

Es wurde nun überraschend gefunden, daß auch mit hohem NCO-Überschuß sonst aus im wesentlichen linearen Komponenten bestehende Polyurethane thermoplastisch, z.B. durch Spritzguß über eine echte flüssige Phase (Schmelze) verarbeitet werden können, wenn diese einer speziellen Temperaturbehandlung unterzogen werden. Gegenstand der vorliegenden Erfindung ist deshalb ein Verfahren zur thermoplastischen Verarbeitung von Polyurethanen bevorzugt durch Spritzguß, die aufgebaut sind im wesentlichen aus

A) einem oder mehren Polydiolen mit Durchschnittsmolekulargewichten von 550-10.000,

B) einem oder mehreren bevorzugt difunktionellen Kettenverlängerern mit Molekulargewichtsgewichten unter 500, die Amino- und bevorzugt Hydroxylgruppen als funktionelle Gruppen enthalten,

C) einen oder mehreren Diisocyanaten,

dadurch gekennzeichnet, daß das NCO:H-Zerewitinoff-aktiv Verhältnis der Reaktionsmischung mindestens 1.10 beträgt und die aus der Reaktionsmischung erhaltenen Polyurethane vor der Spritzgußverarbeitung einer Temperturbehandlung unterzogen werden.

Die Aufbaukomponenten für die erfindungsgemäß zu verwendenden Polyurethane sind bekannt und entsprechen den Stand der Technik.

Überraschend wurde jedoch gefunden, daß, wenn man die Produkte im erfindungsgemäßen NCO:H-Zerewitinoff-aktiv-Verhältnis der Temperaturbehandlung unterwirft, die Schmelzviskosität sich unter weiteren Temperatureinflüssen nicht mehr ändert und über einen weiteren Bereich von NCO:H- Zerewitinoff-aktiv-Verhältnissen bei gegebener Temperatur praktisch konstant ist. Obwohl sich die Produkte wie von D. Dieterich beschrieben nicht mehr in Lösungsmittel wie Dimethylformamid, Dimethylsulfoxid oder Tetrahydrofuran lösen, sind sie dennoch in Spritzgußmaschinen recht gut verarbeitbar, d.h. sie lassen sich trotz hohen Verzweigungsgrades gut schmelzen.

Besonders überraschend ist, daß erst wenn die von Dieterich beschriebene Löslichkeit nicht mehr vorhanden ist, sich eine vom im Rahmen der erfindungsgemäß gewählten NCO:H-aktiv-Verhältnis unabhängige, praktisch konstante Schmelzviskosität einstellt. Damit sind im Rahmen des erfindungsgemäßen NCO.H-aktiv-Verhältnisses die Verarbeitungsbedingungen z.B. in Spritzgußmaschinen konstant und so überraschend unabhängig von unterschiedlichen Dosierungen oder Dosierschwankungen bei der Herstellung der Polyurethan(harnstoff)e.

Sogar auf der Basis von Naphthylen-1,5-diisocyanat oder Bistolylisocyanaten (TODI) aufgebaute Polyurethane lassen sich erfindungsgemäß überraschend gut verarbeiten. Nach der Lehre der DOS 3 329 775 lassen sich solche Elastomere nicht oder nur im Fall sehr weich eingestellter Elastomere schwer thermoplastisch verformen.

Die gute Verarbeitbarkeit in Spritzgußmaschinen erfindungsgemäß zu verwendender Produkte mit einem höheren Anteil an Naphthylen-1,5-diisocyanat war deshalb für einen Fachmann nicht zu erwarten.

Es war deshalb überraschend, daß nach dem erfindungsgemäßen Verfahren auch in komplizierten Formen einwandfreie Formteile mit sehr hohem physikalischen Wertenniveau hergestellt werden können, die sich auch bei langer Beanspruchung bei höherer Temperatur in ihren Abmessungen praktisch nicht verändern.

Bevorzugte, erfindungsgemäß zu verarbeitende Polyurethane sind Abfälle aus der Gießelastomerproduktion, besonders bevorzugt aus der Vulkollan® Produktion. Dabei kann es sich um in der Form mißratene Formteile, um Beschnitt usw. handeln. Fehldosierungen sind nur dann erfindungsgemäß zu verwenden, wenn sie in ihrer Zusammensetzung den genannten Kriterien entsprechen. Daß die erfindungsgemäß zu verarbeitenden Produkte in eine in der Verarbeitungsmaschine einsetzbare Form gebracht werden, also beispielsweise granuliert werden müssen, ist selbstverständlich

Die erfindungsgemäß zu verarbeitenden Polyurethane können aber auch nach bekannten Verfahren aus den unter den Herstellungsbedingungen flüssigen Rohstoffen nach den One-Shot- oder einem Mehrstufenverfahren in Gegenwart oder Abwesenheit von Katalysator(en) z.B. in Form von Zylindergranulat hergestellt werden. Die Reaktion kann in Lösung, wonach zweckmäßigerweise das Lösungsmittel verdampft wird, oder in Substanz z.B. nach einem kontinuierlichen Gießverfahren oder analog der DE-A 2 302 564 in einem Schneckenreaktor durchgeführt werden.

Es wurde gefunden, daß die erforderliche Temperaturbehandlung der empirischen Formel

$$t \;=\; \frac{100}{(T-293)\cdot F} \qquad\qquad (I)$$

mit

t = erforderliche Zeit der Temperaturbehandlung in Tagen

T = Temperatur in °K

F = ein vom Polyadditions-Katalysatorgehalt des Polyurethans abhängiger Faktor, der Zahlenwerte zwischen 1 (katalysatorfreies Polyurethan) und 5 ("hoher Katalysatorgehalt") annehmen kann.

Der Faktor F hängt von der Aktivität des im Polyurethan vorhandenen Katalysators ab und muß im Prinzip für jeden Katalysatortyp und -menge bestimmt werden. Für die Praxis hat sich gezeigt, daß es ausreicht, die für eine bestimmte Temperatur ermittelte notwendige Behandlungszeit für katalysatorfreie Systeme zu halbieren, d.h. F = 2 anzunehmen, um thermoplastisch verarbeitbare Polyurethane zu erhalten. Wenn dadurch die mindestens notwendige Behandlungszeit überschritten wird, sind damit keine Nachteile verbunden. Jedoch empfiehlt es sich, bei der industriellen Produktion den Aufwand der Temperaturbehandlung so niedrig wie nötig zu halten, indem in Vorversuchen der tatsächliche Zahlenwert des Faktors F bestimmt wird.

Die Gültigkeit der Formel I wurde im Temperaturbereich von 295 bis 470 K, d.h. 22 bis ca. 200°C, überprüft.

Vorzugsweise wird die Temperaturbehandlung bei Temperaturen von oberhalb 30°C, besonders bevorzugt oberhalb 50°C, durchgeführt. Temperaturen oberhalb 120°C sind im allgemeinen nicht erforderlich.

Die erfindungsgemäß zu verarbeitenden Polyurethane können die üblichen Additive wie Hydrolysenschutzmittel, Antioxidantien, UV-Stabilisatoren, Wachse, Öle, Füllstoffe, gegebenenfalls auch in Form anorganischer oder organischer Fasern oder Plättchen, Pigmente, Farbstoffe, Mikrobenschutzmittel, Flammschutzmittel enthalten. Sie können mit anderen Polymeren, insbesondere Thermoplasten verschnitten oder gemischt sein und/oder Verarbeitungshilfsmittel enthalten.

Die nach dem erfindungsgemäßen Verfahren erhaltenen Produkte wie z.B. Formkörper wie Spritzgußteile zeichnen sich im Vergleich zu Teilen aus herkömmlichen thermoplastischen Polyurethanen durch eine besonders gute Wärmeformbeständigkeit und ein besonders gutes Rückstellvermögen nach Verformung sowie für Polyurethanthermoplasten sehr gute dynamische Eigenschaften aus. Sie vereinigen außerdem eine hohe Abriebfestigkeit mit einer guten Beständigkeit gegen Öl und neutrale organische Lösungsmittel.

Die im folgenden beschriebenen Beispiele sollen die Erfindung erläutern aber nicht limitieren. Bei der Angabe von Teilen handelt es sich, wenn nichts weiteres erwähnt ist, um Gewichtsteile.

Beispiele

Beispiel 1

100 Gew.-Tle eines Hexandiol-Butandiol-2,2-Dimethylpropandiol-Polyadipats mit einem Durchschnittsmolekulargewicht von 3300 werden auf 130°C erhitzt. Es werden 0,3 Tle. eines Montanesterwachses (Hoechst FE1) und 18 Gew.-Tle Naphthylen-1,5-diisocyanat untergerührt. Sobald die Schmelze klar ist, wird noch ca. 15 min. gerührt. Anschließend wird auf 150°C erhitzt, 4,6 Gew.-Tle Butandiol (NCO:OH-Verhältnis 1.10 molar) homogen untergerührt und nach 35 sec. in eine Schale aus Polytetrafluorethylen gegossen. Es wird ca. 24 Std. bei 100°C getempert und nach dem Erkalten granuliert.

Beispiel 2

Es wird wie in Beispiel 1 beschrieben verfahren, jedoch werden 4,2 Gew.-Tle Butandiol-(1,4) verwendet (NCO:OH-Verhältnis 1.20 molar).

Von den Produkten aus den Beispielen 1 und 2 wird der Grenzschmelzindex (Intrinsic Melt Index, IMI gemessen in g/10 min) in einem Schmelzindexgerät vom Typ HKV 2000 (Hersteller Fa. Göttfert, Buchen Odenwald) bei einem Druck von 2.45 bar und einer Düse mit 1 mm Durchmesser und 15 mm Länge bei 215°C nach unterschiedlich langer Lagerung bei Raumtemperatur bestimmt (s. Tabelle 1):

Tabelle 1

| Grenzschmelzindex (IMI) bei 215°C nach Lagerung bei 22°C. | | |
|---|---|---|
| Lagerzeit Monate | IMI (g/10 min) von Produkt aus | |
| | Beispiel 1 | Beispiel 2 |
| 0 | 3,8 | - |
| 3 | 3,5 | 4,1 |
| 6 | 5,8 | 4,2 |

Beispiel 3 (Vergleich)

Eine Mischung aus 100 Tlen Polybutandioladipat (OH-Zahl 56 mg KOH/g, Säurezahl 0,6 mg KOH/g), 9,5 Gew.-Tle Butandiol-(1,4), 1 Gew.-Tl. Bis-diisopropylphenylcarbodiimid wird auf 120°C erhitzt. Es werden a) 39,4, b) 39,7 Gew.-Tle 4,4'-Diisocyanatodiphenylmethan (MDI) ca. 30 sec. untergerührt und in eine Polytetrafluorethylenschale gegessen. Es wird 1 Std. bei 110°C und 16 Std. bei 80°C gehalten und nach Erkalten granuliert.

Beispiel 4

Es wird wie im Beispiel 3 beschrieben verfahren, jedoch 42,8 Gew.-Tle MDI verwendet.

Beispiele 5 und 6

Es wird wie im Beispiel 3 verfahren, jedoch werden 46,7 (Bsp. 5) und 50,6 (Bsp. 6) Gew.-Tle 4,4'-Diisocyanatodiphenylmethan verwendet.

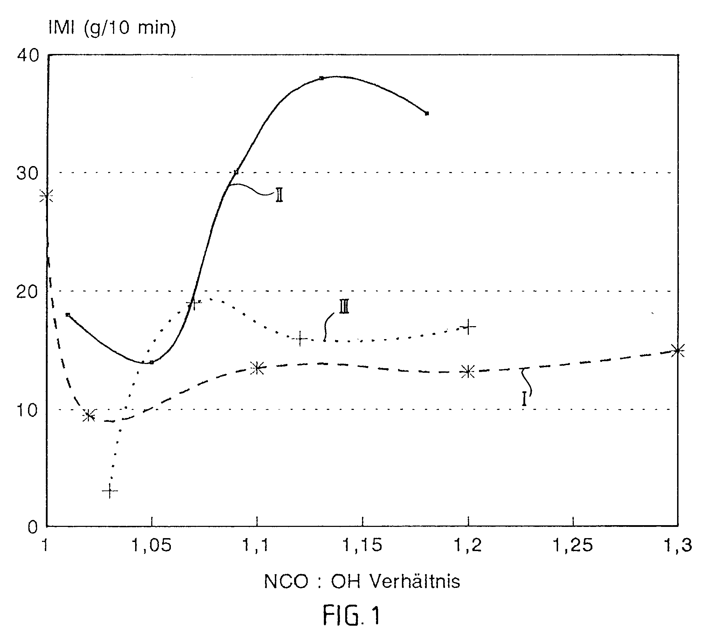

Granulat der Polyurethane aus den Beispielen 3-5 wird sowohl frisch als auch nach 7 monatiger Lagerung bei 2°C im verschlossenen Gefäß vermessen (s. Tabelle 2). Die IMI nach 3-monatiger Lagerung bei 22°C in Abhängigkeit von NCO:OH-Verhältnis ist in Kurve I der Fig. 1 dargestellt.

4

Tabelle 2

| Einfluß der Lagerund auf die Viskosität der Polyurethane aus den Beispielen 3-6: | | | | | |
|---|---|---|---|---|---|
| | PUR aus Beispiel | | | | |
| | 3a | 3b | 4 | 5 | 6 |
| NCO:OH-Verhältnis | 1.00 | 1.02 | 1.10 | 1.20 | 1.30 |
| Lösungsviskosität 25 %ig in Dimethylformamid (mPas) | 3600 | 13300 | teilweise unlöslich | | |
| Lösungsviskosität 7 Mon., 22°C | 3300 | 12800 | angequollen | | |
| IMI bei 200°C frisch (g/10 min) | 26 | 5.7 | 12.5 | 50 | 120 |
| IMI nach Lagerung 3 Mon., 22°C | 28 | 9.5 | 13.5 | 13.2 | 15 |
| IMI nach Lagerung 7 Mon., 22°C | 29 | 6.8 | 11.5 | 12.5 | 13.2 |

Aus Tabellen 1 und 2 ist zu ersehen, daß die erfindungsgemäß zu verwendenden Produkte in Lösungsmitteln wie z.B. Dimethylformamid nicht löslich sind, dennoch gut schmelzbar und somit thermoplastisch zu verarbeiten sind. Die Schmelzviskosität von Produkten gleicher Zusammensetzung aber mit im erfindungsgemäßen Bereich liegenden unterschiedlichen NCO:OH-Verhältnissen nach ausreichender Lagerung praktisch (im Rahmen der Meßungenauigkeit) gleich ist. Durch Spritzgußverarbeitung der Produkte aus Beispielen 1-6 werden Formkörper mit Zugfestigkeiten zwischen 30 und 55 MPa und Bruchdehnungen zwischen 300 und 650 % erhalten.

Beispiel 7

Es wird Beschnitt von Rollen, die mit Polyurethangießelastomer folgende Zusammensetzung hergestellt wurden, eingesetzt:
100 Gew.-Tle Polyethandioladipat (OH-Zahl 56, Säurezahl 0,8)
5,5 Gew.-Tle Butandiol-(1,4)
0,1 Gew.-Tle Trimethylolpropan
27 Gew.-Tle Naphthylendiisocyanat
NCO:OH-Verhältnis = 1,15 (molar)
Der granulierte Beschnitt wird im Vakuum getrocknet, einer Temperaturbehandlung bei 120°C über 25 Stunden unterworfen und in einer Spritzgußmaschine vom Typ ANKER V14 bei einer maximalen Gehäusetemperatur vn 215°C und einem Zyklus von 30/30 sec verspritzt. Die Spritzgußform wird dazu mit einem Silicon-Trennmittel eingesprüht. Es werden Spritzlinge mit matter Oberfläche und folgenden physikalischen Daten erhalten (zum Vergleich sind Daten der Gießkörper gleicher Zusammensetzung aufgeführt); siehe Tabelle 3.

Tabelle 3

| Physikalische Werte von gemäß Beispiel 7 erhaltenen Prüfkörpern | | | | |
|---|---|---|---|---|
| | Maßeinheit | DIN | Ergebnis Spritzling | Gießelastomer |
| 100 % Modul | MPa | 53504 | 8.3 | 7 |
| 300 % Modlul | MPa | 53504 | 19.0 | 13 |
| Zugfestigkeit | MPa | 53504 | 36 | 37 |
| Bruchdehnung | % | 53504 | 556 | 608 |
| Shore A | | 53505 | 85 | 86 |
| Rückprallelastizitat | % | 53512 | 44 | 47 |
| Abrieb | $mm^3$ | 53516 | 49 | |
| Druckvervorformungsrest 24 Std./70°C | % | 53517 | 24 | 20 |

Aus Tabelle 3 ist zu erkennen, daß die durch Spritzguß nach dem erfindungsgemäßen Verfahren erhaltenen Formkörper in ihren physikalischen Eigenschaften den Gießlingen, aus deren Beschnitt sie hergestellt wurden, durchaus entsprechen.

Beispiel 8

Es werden Produkte mit einer Zusammensetzung wie in den Beispielen 1 und 2, jedoch mit einem NCO-OH-Verhältnis von 1,22, in einer Zweiwellenschneckenmaschine bei einer Temperatur von etwa 220°C kontinuierlich hergestellt. Das Granulat 14 Tage bei 80°C unter Normaldruck im Trockenschranke gelagert und der IMI bei 200°C und 210°C verfolgt (s. Tabelle 4).

Tabelle 4

| Grenzschmelzindex (IMI) des Produktes aus Beispiel 8 nach Lagerung bei 80°C: | | |
|---|---|---|
| Temperzeit Tage/bei 80°C | IMI (g/10 min) bei | |
| | 200°C | 210°C |
| 1 | 103 | |
| 2 | 10 | |
| 3 | | 38 |
| 7 | | 32 |
| 8 | | 35 |
| 9 | | 29 |
| 10 | | 37 |
| 13 | | 30.5 |
| 14 | | 34 |

Beispiel 9

In 592,3 g entwässertes Hexandiol-Neopentylglykol-Polyadipat (OH-Zahl 56 mg KOH/g) werden je 0,6 Gew.-% Bis-2,6-diisopropylphenyl-carbodiimid und 4-Methyl-2,6-di-tert.-Butylphenol eingearbeitet. Bei 50-60°C werden 13,8 g Isophorondiamin (IPDA) in 5 min eingerührt. Nach Erwärmung auf 130°C werden 142.2 g 1,5-Naphthylendiisocyanat zugegeben, 10 min gerührt, wobei die Temperatur am Ende bei 100°C liegt. Nach erneutem Erwärmen auf 120°C werden dann die zur Einstellung des NCO:H-aktiv Verhältnisses notwendige Menge an Kettenverlängerer- bzw. Kettenverlängerergemischen zugeben (s. Tab. 5). Das Gemisch wird für 60 sec. intensiv gerührt, auf Bleche gegossen und anschließend 24 Std. bei 120°C ausgeheizt. Nach Granulieren wird das Material im Spritzgußverfahren verarbeitet. Die erhaltenen Spritzgießlinge wurden vor der Prüfung der mechanischen Eigenschaften, die in Tabelle 5 aufgeführt sind, noch einmal für 24 Stunden bei 100°C getempert:

6

Tabelle 5

Herstellung und mechanische Daten der nach Beispiel 9 hergestellten Prüfkörper

| Beispiel | B/H | NCO:H-aktiv mol*) / mol | Zugversuch Zugfestigkeit (MPa) DIN 53504 | nach 24 std. Temperung bei 100° C Bruchdehnung (%) DIN 53504 | Weiterreißwert (kN/m) DIN 53504 | Elastizität (%) DIN 53512 | Shore A Härte DIN 53505 | DVR 24 Std. 70° C DIN 53517 | 100° C |
|---|---|---|---|---|---|---|---|---|---|
| 9-1 | 1:1 | 1.10 | 45.9 | 598 | 52.0 | 46.4 | 85 | 29.2 | |
| 9-2 | 1:1 | 1.16 | 42.3 | 550 | 41.5 | 47.4 | 78 | 18.7 | 47.7 |
| 9-3 | 1:0 | 1.10 | 34.0 | 656 | 66.5 | 45.4 | 82 | 26.8 | |
| Vergleichsbeispiele | | | | | | | | | |
| 9-4 | 1.1 | 1.02 | 25.5 | 558 | 51.4 | 43.6 | 84 | 37.5 | |
| 9-5 | 1.1 | 1.06 | 39.2 | 576 | 62.4 | 46.4 | 85 | 35.0 | |

*) B/H: Molverhältnis Butandiol/Hexandiol

EP 0 615 989 A1

Tabelle 6

| MVI-Werte der nach Beispiel 9 erhaltenen Granulate | | | | |
|---|---|---|---|---|
| Beispiel | Butandil/ Haxandiol (mol/mol) | NCO/H-aktiv Verhältnis | MVI[1] | |
| | | | wert g/10 min | Temp. (°C) |
| 9-1 | 1:1 | 1.10 | 7.8 | 190 |
| | | | 29.2 | 195 |
| 9-2 | 1:1 | 1.16 | 16.6 | 190 |
| 9-3 | 1:0 | 1.10 | 1.8 | 200 |
| | | | 27.0 | 205 |
| Vergleichsbeispiel: | | | | |
| 9-4 | 1:1 | 1.02 | 8.9 | 180 |
| 9-5 | 1:1 | 1.06 | 3.9 | 185 |
| | | | 15.7 | 190 |

[1] MELT VOLUME INDEX gemäß DIN 53735

Beispiel 10

Zu 66 2/3 Tln eines Hexandiol-Neopentylglykol-polyadipats (OH-Zahl 56 mg KOH/g), die zuvor entwässert, mit Hoechstwachs-C (0,6 Gew.-%), Bis-2,6-diisopropylphenylcarbodiimid (0,6 Gew.-%) und 4-Methyl-2,6-di-tert.-Butylphenol (0,1 Gew.-%) versetzt wurden, wurden in einem Rührbecherglas bei 130°C 24 Tle. 1,5-Naphthylendiisocyanat gegeben. Das 1,5-Naphthylendiisocyanat ist nach ca, 15 min, gelöst; die Heizung wurde auf 90°C umgestellt, wodurch die Temperatur der Reaktionsmischung innerhalb ca, 2 Std. auf diesen Wert abfiel. Der NCO-Wert wurde zu 7,3 % bestimmt (Theorie 7,4 %),

2.333 Tle Isophorondiamin wurden bei ca, 60°C in 33 1/3 Tle eines Hexandiol-Neopentylglykol-polyadipats eingerührt. Diese Mischung wurde anschließend zum 80-90°C warmen NCO-Prepolymeren (zwischenzeitlich in eine Blechdose umgefüllt) mit hinzugefügt: das so erhaltene Gemisch wiederum rührte man zwecks vollständiger Durchmischung bei dieser Temperatur für ca. 5 min. Die Viskosität bleibt während dieser Zeit weitgehend konstant, die Mischung trübt ein. Anschließend wird der Ansatz auf 120°C erwärmt und die zur Einstellung der jeweiligen Kennzahl notwendige Menge an Kettenverlängerer (-mischung) zugegeben. Diese jetzt mit allen Komponenten versehene Reaktionsmischung wird für weitere ca. 50 sec. intensiv gerührt, wobei eine leichte Exothermie (ca, 5-10°C) beobachtet wird. Nach dieser Zeit ist das Gemisch noch kurze Zeit fließfähig und wird auf mit Teflonfolie belegte Bleche ausgegossen. Das so erhaltene, weiße und absolut homogene Produkt wird anschließend für 24 Std. bei 120°C im Umlufttrockenschrank ausgeheizt, granuliert und der weiteren Verarbeitung durch Spritzguß bzw. Analyse zugeführt, siehe Tabelle 7:

Tabelle 7

Herstellung und mechanische Daten der nach Beispiel 10 hergestellten Prüfkörper

| Beispiel | B/H mol* | NCO:H-aktiv mol | Zugversuch nach 24 std. Temperung bei 100°C | | | | | DVR 24 Std. | |
|---|---|---|---|---|---|---|---|---|---|
| | | | Zugfestigkeit (MPa) | Bruchdehnung (%) | Weiterreißwert (kN/m) | Elastizität (%) | Härte Shore A | 70°C | 100°C |
| | | | DIN 53504 | DIN 53504 | DIN 53504 | DIN 53512 | DIN 53505 | DIN 53517 | |
| 10-1 | 5:1 | 1.13 | 38.2 | 505 | 45.3 | 50.5 | 80 | 25.7 | 51.3 |
| 10-2 | 5:1 | 1.16 | 41.2 | 516 | 43.1 | 47.9 | 81 | 27.3 | 53.9 |
| 10-3 | 5:1 | 1.18 | 41.0 | 529 | 38.1 | 50.0 | 80 | 24.6 | 48.3 |
| 10-4 | 5:1 | 1.18 | 41.1 | 527 | 36.1 | 49.5 | 80 | 25.7 | 51.1 |

Anmerkung: Lagerzeit des NCO-Prepolymeren bei 90°C bis zur Umsetzung:
10-1: 24 Std., 10-2: 3 Std.; 10-3: 24 Std.; 10-4: 48 Std.

*): B/H: Molverhältnis Butandiol/Hexandiol

Beispiel 11

Das Produkt aus Beispiel 7 wird nach dem Prepolymerverfahren, wobei zunächst ein NCO-Semiprepolymer aus der Hälfte des Polyesters und dem gesamten Naphthylendiisocyanat hergestellt wird, in verschiedenen NCO:OH-Verhältnissen in einer Zweiwellenschneckenmaschine bei Temperaturen zwischen 160 und 220°C hergestellt. Die aus dem Reaktor austretende Schmelze wird in Wasser von etwa 15°C abgeschreckt und 48 Stunden bei 80°C im Vakuum getrocknet und getempert. Bei 220°C und 2,45 bar werden folgende Grenzschmelzindizes (IMI, gemessen in g/10 Minuten) in Abhängigkeit vom NCO:OH-Verhältnis bestimmt, siehe Tabelle 8 sowie Kurve II in Fig. 1.

Tabelle 8

| NCO:OH | IMI bei 220°C |
|--------|---------------|
| 1.01 | 18 |
| 1.05 | 14 |
| 1.09 | 30 |
| 1.13 | 38 |
| 1.18 | 35 |

Beispiel 12

Es wird wie in Beispiel 11 beschrieben verfahren, jedoch als Kettenverlängerer anstatt der Mischung aus Butandiol und Trimethylolpropan eine Mischung aus 5,1 Gew.-Teilen Butandiol-(1,4) und 0,75 Gew.-Teilen Hexandiol-(1,6) verwendet. Außerdem werden auf den Polyester bezogen 25 ppm Titantetrabutylat als Katalysator eingesetzt. Die an der Luft abgekühlten Produkte werden 16 h bei 80°C im Vakuum getempert. Danach werden folgende Grenzschmelzindizes gemessen, siehe Tabelle 9 und Kurve III in Fig. 1.

Tabelle 9

| NCO:OH | IMI bei 218°C |
|--------|---------------|
| 1.02 | 3 |
| 1.07 | 19 |
| 1.12 | 16 |
| 1.2 | 17 |

Wie aus Tabelle 9 zu ersehen, ergibt sich für die Katalyse mit 25 ppm (ber. auf Polyester) Titantetrabutylat ein Faktor F von ca. 3.

**Patentansprüche**

1. Verfahren zur thermoplastishen Verarbeitung über die Schmelzphase von Polyurethanen mit vom NCO:H-aktiv Verhältnis weitgehend unabhängiger Schmelzviskosität, die aufgebaut sind im wesentlichen aus
   A) einem oder mehreren Polydiol(en) mit Durchschnittsmolekulargewicht(en) von 550 bis 10.000,
   B) einem oder mehreren im wesentlichen difunktionellen Kettenverlängerer(n) mit einem Molekulargewicht unter 500, die Amino- und/oder Hydroxylgruppen als funktionelle Gruppen enthalten,
   C) einem oder mehreren Diisocyanat(en),
   dadurch gekennzeichnet, daß das Verhältnis der NCO-Gruppen von Komponente C) zu Zerewitinoff-aktiven Gruppen der Komponenten A und B mindestens 1.10 beträgt und die Polyurethane vor der thermoplastischen Verarbeitung einer Temperaturbehandlung unterzogen werden.

2. Verfahren nach Anspruch 1, dadurch gekennzeichnet, daß die thermoplastische Verarbeitung durch Spitzguß erfolgt.

3. Verfahren nach einem der Ansprüche 1 oder 2, dadurch gekennzeichnet, daß als Diisocyanat C mindestens 90 Mol-% Naphthylen-1,5-diisocyanat verwendet werden.

4. Verfahren nach einem der Ansprüche 1 bis 3, dadurch gekennzeichnet, daß die mittlere Funktionalität der Komponenten A und B bei 1.95 bis 2.35 liegt.

5. Verfahren nach einem der Ansprüche 1 bis 4, dadurch gekennzeichnet, daß als Kettenverlängerer B Dialkohole verwendet werden.

6. Verfahren nach einem der Ansprüche 1 bis 5, dadurch gekennzeichnet, daß die zu verarbeitenden Polyurethane Abfälle wie z.B. Beschnitt aus der Polyurethangießelastomerproduktion sind.

7. Verfahren nach einem der Ansprüche 1 bis 6, dadurch gekennzeichnet, daß das NCO:H zerewitinoff aktiv Verhältnis mindestens 1.20 beträgt.

8. Verfahren nach einem der Ansprüche 1 bis 7, dadurch gekennzeichnet, daß die erfindungsgemäß zu verarbeitenden Polyurethane und/oder Harnstoffe so lange bei Temperaturen unter 220°C gelagert sind, daß sich ihre Schmelzviskosität bei weiterem Lagern nicht mehr wesentlich ändert.

9. Verfahren nach einem der Ansprüche 1 bis 8, dadurch gekennzeichnet, daß die Temperaturbehandlung über einen Mindestzeitraum von

$$t = \frac{100}{(T-293) \cdot F} \quad ,$$

wobei

t = Zeit in Tagen
T = Temperatur in K
F = 1 für katalysatorfreie Polyurethane und bis 5 für katalysatorhaltige Polyurethane

bezeichnet, erfolgt.

FIG. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | US-A-3 233 025 (B.F. FRYE ET AL.)<br>* Ansprüche 1-5 *<br>* Spalte 4, Zeile 29 - Spalte 5, Zeile 10 *<br>* Spalte 5, Zeile 70 - Spalte 6, Zeile 26 *<br>--- | 1,2 | C08G18/08<br>C08G18/10<br>C08G18/76<br>C08J11/06 |
| X | DE-A-20 27 287 (ELASTOMER A.G.)<br>* Ansprüche 1-6 *<br>* Seite 5, Absatz 1 -Absatz 3 *<br>* Beispiele 1-4 *<br>--- | 1,2,7,8 | |
| X | FR-A-1 348 657 (MOBAY)<br>* Seite 1, rechte Spalte, Absatz 2 *<br>* Seite 2, linke Spalte, Absatz 1 -Absatz 2 *<br>* Seite 2, rechte Spalte, Absatz 2 *<br>--- | 1,2,7 | |
| A | US-A-2 729 618 (K.E. MUELLER ET AL.)<br>* Ansprüche 1-3 *<br>* Spalte 4, Zeile 27 - Zeile 38 *<br>* Beispiel 1 *<br>--- | 1 | **RECHERCHIERTE SACHGEBIETE (Int.Cl.5)** |
| A | FR-A-1 074 451 (I.C.I.)<br>* Beispiele 6-14 *<br>----- | 1 | C08G<br>C08J |

Der vorliegende Recherchenbericht wurde für alle Patentansprüche erstellt

| Recherchenort | Abschlußdatum der Recherche | Prüfer |
|---|---|---|
| DEN HAAG | 11. Juli 1994 | Van Puymbroeck, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P04C00)